# EUROPÄISCHE PATENTSCHRIFT

(11) **EP 2 671 012 B1**
(45) Veröffentlichungstag und Bekanntmachung des Hinweises auf die Patenterteilung: **29.03.2017**
(21) Anmeldenummer: 12701118.7
(22) Anmeldetag: 25.01.2012
(51) Int. Cl.: F16L 19/00

(54) **VERBINDUNGSVORRICHTUNG FÜR ROHR- ODER SCHLAUCHLEITUNGEN MIT MONTAGEERKENNUNG**
CONNECTING DEVICE FOR CONDUITS OR HOSE LINES HAVING ASSEMBLY DETECTION
DISPOSITIF DE RACCORDEMENT POUR DES CONDUITES OU DES FLEXIBLES AVEC IDENTIFICATION DE MONTAGE

(30) Priorität: 01.02.2011 DE 102011009956
(43) Veröffentlichungstag der Anmeldung: 11.12.2013
(73) Patentinhaber: Parker Hannifin Manufacturing Germany GmbH & Co. KG, 33659 Bielefeld (DE)
(72) Erfinder: NEISKE, Oliver, 33415 Verl (DE)
(74) Vertreter: Müller, Karl-Ernst
(86) Internationale Anmeldenummer: PCT/EP2012/051104
(87) Internationale Veröffentlichungsnummer: WO 2012/104179

(56) Entgegenhaltungen:
- EP-A1- 0 535 867
- EP-A1- 1 433 992
- EP-A2- 0 945 662
- WO-A1-99/57476
- WO-A2-01/42700
- DE-A1-102007 032 027

## Beschreibung

Die Erfindung betrifft eine Verbindungsvorrichtung für Rohr- oder Schlauchleitungen mit einem eine Bohrung zur Durchleitung eines die Rohr- oder Schlauchleitung durchströmenden Mediums aufweisenden Verbindungskörper und mit einem in eine am vorderen Ende des Verbindungskörpers ausgebildete Aufnahme einsteckbaren und darin mittels einer außen auf dem Verbindungskörper zwischen einer Lösestellung und einer Montagestellung verdrehbar angeordneten Überwurfmutter festlegbaren rohähnlichen Endstück, wobei zwischen den einander zugewandten Stirnflächen von Überwurfmutter und Verbindungskörper eine den Montagezustand von Verbindungsvorrichtung wiedergebende Anzeige angeordnet ist, wobei die Anzeige aus zwei jeweils an den Stirnseiten von Verbindungskörper und Überwurfmutter ausgebildeten ringförmigen Anzeigeelementen als Träger wenigstens jeweils einer Markierung besteht, wobei die Markierungen der beiden Anzeigeelemente zu Beginn der Montage der Überwurfmutter an unterschiedlichen Stellen des Umfangs von Verbindungskörper und Überwurfmutter stehen und bei Fertigmontage der Verbindungsvorrichtung durch die beim Aufschrauben der Überwurfmutter erfolgende Relativdrehung der beiden Anzeigeelemente gegeneinander in eine miteinander übereinstimmende Stellung gebracht sind.

Eine Verbindungsvorrichtung ist beispielsweise in der EP 0 366 789 B1 beschrieben. In zugeordnete Aufnahmen eines Verbindungskörpers sind beidseitig die Endbereiche von miteinander zu verbindenden Rohren eingeschoben. Diese Endbereiche der Rohre sind jeweils mit einer radialen Rohraufweitung versehen, an denen sich jeweils eine Überwurfmutter zur Festlegung des zugeordneten Rohrendes an dem Verbindungskörper abstützt. Die Überwurfmuttern sind auf entsprechend an dem Verbindungskörper ausgebildete Außengewinde aufschraubbar, so dass die Rohrenden bei der Montage der Verbindungsvorrichtung in die am Verbindungskörper ausgebildeten Aufnahmen hineingedrückt und darin festgelegt werden. Soweit es im Hinblick auf eine ordnungsgemäße beziehungsweise vorschriftsmäßige Montage der Verbindungsvorrichtung darauf ankommt, dass die Überwurfmuttern in die richtige Position auf den Verbindungskörper geschraubt sind, um die für die Dichtheit der Verbindungsvorrichtung ausreichende Vorspannung zwischen dem Verbindungskörper, der Überwurfmutter und dem Rohrende sicherzustellen, sind zwischen den Stirnflächen von Überwurfmutter und Verbindungskörper in ihrer Oberfläche farbig ausgelegte Tellerfedern angeordnet. Soweit die Stirnflächen von Überwurfmutter und Verbindungskörper vor der Montage einen axialen Abstand aufweisen, ist dieser Abstand durch die sich zwischen den Stirnflächen von Überwurfmutter und Verbindungskörper abstützende Tellerfeder überbrückt, die somit bei Beginn der Montage schräg zwischen den auseinander liegenden Stirnflächen steht, so dass deren farbige Oberfläche erkennbar ist. Mit zunehmender Verschraubung der Überwurfmutter auf dem Verbindungskörper wird die Tellerfeder gespannt und stellt sich steil, so dass am Ende der Montage lediglich die äußere Umfangsfläche der Tellerfeder sichtbar bleibt, die nicht farbig ausgelegt ist. Damit ist der Montagezustand erkennbar gemacht.

Mit der bekannten Montageerkennung bei der in der EP 0 366 789 B1 beschriebenen Verbindungsvorrichtung ist der Nachteil verbunden, dass je nach der Toleranzlage beziehungsweise der Montagezustände bei wiederholter Demontage und Montage der Verbindungsvorrichtung die eingesetzten Tellerfedern schneller nachgeben und schon flach gedrückt sein können, ohne dass die für die Dichtheit ausreichende Vorspannung zwischen den Bauteilen vorliegt. Eine andere Möglichkeit besteht darin, dass in einer bestimmten Stellung der Überwurfmutter bereits eine ausreichende Vorspannung der Bauteile vorliegt, die eingesetzte Tellerfeder jedoch noch nicht vollständig flach gedrückt ist, so dass trotz Erreichen des Endmontagezustandes die jeweilige Tellerfeder den Montagezustand als nicht ausreichend charakterisiert.

Soweit bei der in der EP 0 945 662 A2 beschriebenen Verbindungsvorrichtung mit den eingangs genannten Merkmalen Anzeigeelemente zur Überprüfung des Montagezustandes der Verbindungsvorrichtung vorgesehen sind, handelt es sich dabei um im Inneren der Verbindungsvorrichtung angeordnete Rastelemente, die das Erreichen eines vorgegebenen Montagezustandes fühlbar machen.

In der EP 0 535 867 A1 ist eine Verbindungsvorrichtung mit einem zwischen den einander gegenüberliegenden Stirnflächen von Verbindungskörper und Überwurfmutter angeordneten Federelement offenbart, welches zwischen den Teilen formschlüssig fixiert ist und bei einem Festziehen der Schraubverbindung in eine gestreckte Lage gebracht wird. Dieses Federelement hat die Aufgabe, aufgrund seiner formschlüssigen Verbindung mit den daran anliegenden Bauteilen für eine Sicherung der Verbindungsvorrichtung gegen ein Öffnen durch Vibrationen oder dergleichen zu sorgen.

Die WO 99/57476 A1 offenbart eine Verbindungsvorrichtung, bei welcher der Montagezustand über eine außen angebrachte Farbmarkierung sichtbar gemacht ist. Hierzu ist auf einer äußeren Umfangsfläche des Verbindungskörpers eine farbige Markierung angebracht, die im Rahmen der Montage der Verbindungsvorrichtung von der darüber greifenden Überwurfmutter überdeckt wird, so dass von einer vollständigen Montage auszugehen ist, wenn die Farbmarkierung nicht mehr sichtbar ist.

Die weiterhin aus der DE 10 2007 032 027 A1 bekannte Verbindungsvorrichtung weist zwei Schlauchstutzen auf, von denen der eine Schlauchstutzen mindestens eine Ausnehmung aufweist, die am Rand des Gehäuses beginnend sich in Richtung des Bodens des Gehäuses erstreckt, wobei der zweite Schlauchstutzen mindestens ein Formelement besitzt, welches in die mindestens eine Ausnehmung einführbar ist, wobei die Schlauchstutzen über daran angeordnete Rastelemente zusammenwirken. Mit einer derartigen Ausgestaltung soll auch die Möglichkeit eröffnet werden, das korrekte Erreichen der Verbindung mittels einer Sichtkontrolle zu prüfen.

Soweit die aus der WO 01/42700 A2 ersichtliche Verbindungsvorrichtung wiederum eine sichere Verbindung der jeweils angeschlossenen Teile ermöglichen soll, ist dort zur Überprüfung des Montagezustandes eine "Klickfunktion" ausgebildet, mit der das Erreichen eines vorgegebenen Montagezustandes erkennbar sein soll.

Soweit es in der Handhabungspraxis derartiger Verbindungsvorrichtungen vorkommt, dass die Verbindungsvorrichtung versehentlich stärker als vorgesehen montiert, d.h. die Überwurfmutter stärker angezogen wird, ist dies bei der Erstmontage nicht kritisch für die Dichtheit beziehungsweise Sicherheit der Verbindung. Bei dem Einsatz von Montageerkennungen allerdings kann es zu Verwirrungen kommen, da durch eine "Übermontage" die Position von an einer Montageerkennung angebrachten Markierungen verändert wird. Würde man in einem Fall einer zunächst erfolgten Übermontage die Überwurfmutter bis zum Erreichen der die Fertigmontage anzeigenden Markierung zurückdrehen, würde die Verbindung wieder gelockert, was auszuschließen ist. Hinzu kommt, dass bei einer Wiederholmontage die Verbindung generell in die gleiche Montageposition gebracht werden muss wie bei der Erstmontage. Bei einer im Anschluss an eine Übermontage erfolgenden Wiederholmontage aber zeigt die Montageerkennung unter Umständen schon vor einem Erreichen des Übermontage-Zustandes die Fertigmontage der Verbindung an, so dass im Ergebnis eine zu lockere Verbindungsvorrichtung erhalten wird.

Der Erfindung liegt daher die Aufgabe zugrunde, für eine Verbindungsvorrichtung mit den gattungsgemäßen Merkmalen eine verbesserte Montageerkennung zur Verfügung zu stellen, die die Auswirkungen einer bei der Erstmontage der Verbindungsvorrichtung erfolgten Übermontage eliminiert.

Die Lösung dieser Aufgabe ergibt sich einschließlich vorteilhafter Ausgestaltungen und Weiterbildungen der Erfindung aus dem Inhalt der Patentansprüche, welche dieser Beschreibung nachgestellt sind.

Die Erfindung sieht in ihrem Grundgedanken vor, dass ein Anzeigering durch die beim Aufschrauben der Überwurfmutter auf den Verbindungskörper erfolgende Relativdrehung nach Erreichen des Anschlages zwischen den beiderseitigen Anschlagflächen der Anzeigeelemente nach Überwindung eines voreingestellten Widerstands verdrehbar angeordnet ist.

Soweit die beiden Anzeigeelemente mit den an ihnen ausgebildeten Anschlagflächen am Ende des Montageweges bei der Erstmontage gegeneinander stoßen, wird bei einer weiteren Drehung der Überwurfmutter im Falle einer Übermontage der drehbar angeordnete Anzeigering mitgenommen und verdreht, wobei dieser Anzeigering mit seinen Markierungen in der der Übermontage entsprechenden Stellung stehen bleibt. Damit erfolgt eine entsprechende Neuausrichtung des jeweiligen drehbaren Anzeigerings. Wird nun die Verbindungsvorrichtung gelöst, so verbleibt der bei der Übermontage verdrehte Anzeigering in der durch die Übermontage festgelegten Stellung, und bei einer Wiederholmontage muss die Überwurfmutter wieder in die bei der Erstmontage erreichte Stellung gebracht werden, bevor die Fertigmontage angezeigt ist. Somit ist die Auswirkungen einer bei der Erstmontage der Verbindungsvorrichtung erfolgten Übermontage eliminiert.

Soweit gemäß der Erfindung wenigstens ein Anzeigeelement als gesonderter, entweder an dem Verbindungskörper oder an der Überwurfmutter angebrachter Anzeigering ausgebildet ist, kann dieser Anzeigering verdrehbar angeordnet sein. Sind beide Anzeigeelemente als Anzeigeringe ausgebildet, so können einer der beiden an Überwurfmutter und Verbindungskörper angebrachten Anzeigeringe oder aber auch beide Anzeigeringe verdrehbar sein.

Darüber hinaus ist mit der Erfindung der Vorteil einer genaueren Darstellung des Montagezustandes verbunden, weil auf das Zusammenwirken der beiden sowohl an dem Verbindungskörper wie auch der Überwurfmutter angebrachten Anzeigeelemente abgestellt ist.

Hierbei kann nach einem Ausführungsbeispiel der Erfindung vorgesehen sein, dass die Stirnflächen der am Verbindungskörper und der Überwurfmutter jeweils ausgebildeten Anzeigeelemente gewindeartig mit einer am äußeren Ende des zugeordneten vordersten Gewindeganges angeordneten, axial ausgerichteten Anschlagfläche als Markierung ausgebildet sind, wobei vor Abschluss der Montage zwischen den Anzeigeelementen einerseits ein axialer Spalt und andererseits zwischen deren Anschlagflächen ein sich in Umfangsrichtung erstreckender Abstand besteht und bei Fertigmontage aufgrund der bei Drehung de Überwurfmutter eingetretenen axialen Verschiebung und gleichzeitige Relativdrehung der Anzeigeelemente zueinander der axiale Spalt geschlossen ist und die beiderseitigen Anschlagflächen der Anzeigeelemente aneinander anliegen.

Soweit die Breite des zu Beginn der Montage bestehenden axialen Spaltes von der Auslegung des Gewindes für das Aufschrauben der Überwurfmutter auf den Verbindungskörper und dem daraus folgenden axialen Verschiebeweg abhängig ist, wirken insbesondere die beiden zunächst beabstandeten Anschlagflächen der beiden Anzeigeelemente als den Montagezustand der Verbindung wiedergebende Markierungen, soweit diese gemeinsam mit den Stirnkanten der beiden Anzeigeelemente ein offenes Fenster bilden, welches sich bei Durchschreiten des Montageweges durch die Überwurfmutter schließt und bei Fertigmontage vollständig geschlossen ist.

Zusätzlich oder auch alternativ kann vorgesehen sein, dass die Markierungen aus an wenigstens einem Umfangsbereich der ringförmigen Elemente angeordneten optisch erkennbaren Zeichen bestehen, die bei Fertigmontage durch die Verdrehung der ringförmigen Elemente gegeneinander in eine Flucht miteinander gebracht sind, so dass dadurch die Montageerkennung gegeben ist.

Um die Stellung der beiden Anzeigeelemente zueinander besser erkennbar zu machen, ist nach einem Ausführungsbeispiel der Erfindung vorgesehen, dass die von dem an der Überwurfmutter angeordneten Anzeigelement bei deren Relativdrehung zum Verbindungskörper überstrichene Umfangsfläche des Verbindungskörpers farblich abgesetzt ist. Damit ist das zwischen den Anzeigeelementen zu Beginn der Montage bestehende Fenster farblich sichtbar, während bei geschlossenem Fenster der Farbeindruck entfällt.

Im Einzelnen ist hinsichtlich der konstruktiven Ausbildung der Anzeigeelemente vorgesehen sein, dass jedes Anzeigeelement von einem gesonderten, mit dem Verbindungskörper beziehungsweise der Überwurfmutter verbundenen Anzeigering gebildet ist.

Gemäß einer alternativen Ausführung ist es auch ausreichend, wenn eines der Anzeigeelemente aus einem gesonderten mit dem Verbindungskörper oder der Überwurfmutter verbundenen Anzeigering besteht und das andere Anzeigeelement mit Gewindegang und Anschlagfläche einstückig an der Stirnfläche von Verbindungskörper oder Überwurfmutter ausgearbeitet ist.

In der Zeichnung sind Ausführungsbeispiele der Erfindung wiedergegeben, welche nachstehend beschrieben sind. Es zeigen:
- Fig. 1: eine Verbindungsvorrichtung mit einem Verbindungskörper und einer Überwurfmutter sowie jeweils einem an dem Verbindungskörper und der Überwurfmutter angeordneten Anzeigering als Anzeigeelementen vor Erreichen der Fertigmontage in einer Seitenansicht,
- Fig. 2: die Verbindungsvorrichtung gemäß Figur 1 in dem Zustand der Fertigmontage,
- Fig. 3: den Gegenstand der Figur 2 in einer um 180° gedrehten Rückansicht,
- Fig. 4: die Verbindungsvorrichtung gemäß Figur 2 im Anschluss an eine Übermontage,
- Fig. 5: die beiden Anzeigeelemente gemäß Figuren 1 bzw. 2 in einer Einzeldarstellung.

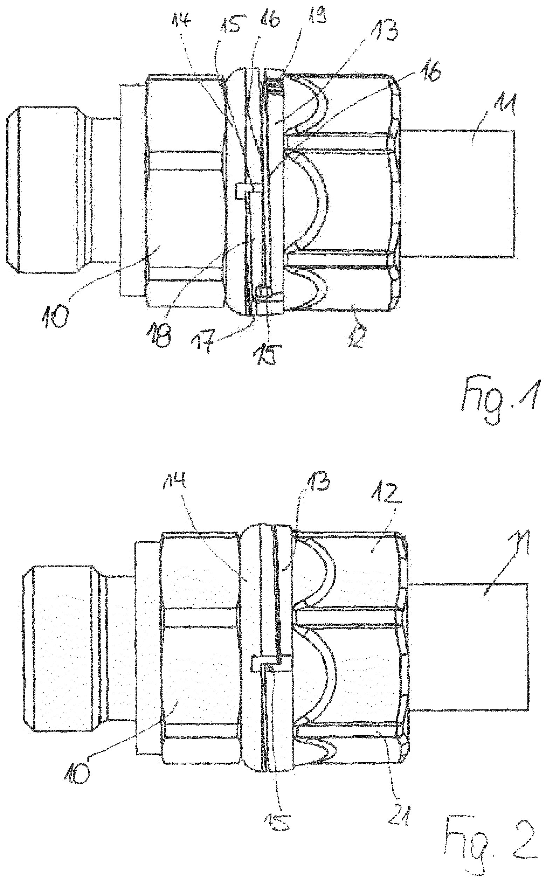

Die zunächst aus Figur 1 ersichtliche Verbindungsvorrichtung besteht aus einem Verbindungskörper 10, in dessen nicht weiter erkennbare Aufnahme ein rohrähnliches Endstück 11 eingesteckt und darin mittels einer auf den Verbindungskörper 10 bereits (teil)aufgeschraubten Überwurfmutter 12 gehalten ist. Die Verbindung zwischen dem rohrähnlichen Endstück 11 und der Überwurfmutter 12 ist für die Ausgestaltung der Erfindung nicht von Bedeutung.

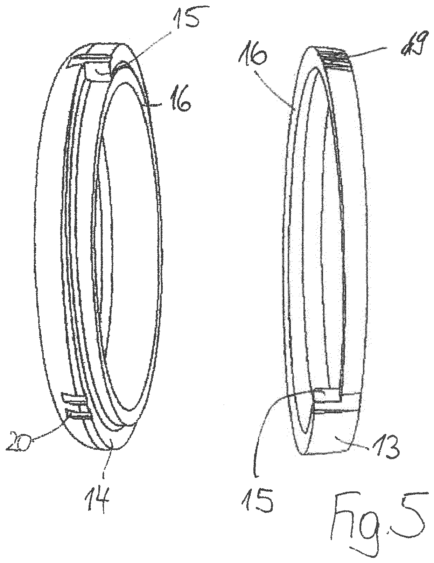

Zur Wiedergabe beziehungsweise Erkennbarkeit des jeweiligen Montagezustandes sind als Anzeige zwei miteinander zusammenwirkende Anzeigeelemente 13, 14 angeordnet, wobei das Anzeigeelement 13 an der Überwurfmutter 12 angebracht ist und das Anzeigeelement 14 an dem Verbindungskörper 10 angebracht ist. Bei dem dargestellten Ausführungsbeispiel bestehen beide Anzeigeelemente 13, 14 jeweils aus einem gesonderten Anzeigering, wie sich diese Anzeigeringe aus Figur 5 näher ergeben.

Wie sich aus einer Zusammenschau der Figuren 1 und 5 ergibt, ist die jeweilige Stirnfläche 16 jedes Anzeigeelements 13, 14 gewindeartig ausgebildet, wobei am äußeren Ende des zugeordneten vordersten Gewindeganges eine axial ausgerichtete Anschlagfläche 15 als Ende des Gewindeganges angeordnet ist. Die beiden Anzeigeringe als Anzeigeelemente 13 und 14 sind in ihrer Lage jeweils derart auf den Verbindungskörper 10 beziehungsweise die Überwurfmutter 12 ausgerichtet, dass im letzten Bereich des Schraubweges der Überwurfmutter 12 vor Erreichen der Fertigmontage ein axialer Spalt 17 zwischen den Stirnflächen 16 der Anzeigeelemente 13, 14 besteht und andererseits die beiden Anschlagflächen 15 des Anzeigeelementes 13 und des Anzeigeelementes 14 einen sich in Umfangsrichtung erstreckenden Abstand einhalten, so dass sich gemeinsam mit den im Bereich des Umfangsabstandes gelegenen Abschnitten der Stirnflächen 16 ein Fenster 18 ergibt, wobei dieses Fenster 18 beziehungsweise die Anschlagflächen 15 als an den Anzeigeelementen 13, 14 angeordnete Markierungen für die Verdeutlichung des Montagezustandes aufgefasst werden können. Soweit vorgesehen sein kann, dass die von dem an der Überwurfmutter 12 angeordneten Anzeigeelement 13 bei deren Relativdrehung zum Verbindungskörper 10 überstrichene Umfangsfläche des Verbindungskörper 10 farblich abgesetzt ist, erscheint der Boden des Fensters 18 entsprechend farbig, so dass das in dem aus Figur 1 ersichtlichen Montagezustand vor Erreichen der Fertigmontage noch offene Fenster 18 mit einem farblich abgesetzten Boden erscheint und daher gut erkennbar ist.

Soweit aus Figur 2 die Fertigmontagestellung der Verbindungsvorrichtung gemäß Figur 1 erkennbar ist, ist ersichtlich, dass durch die Drehung der Überwurfmutter in die Zeichnungsebene herein die Anschlagfläche 15 des an der Überwurfmutter 13 angebrachten Anzeigeelements sich verdreht hat und nun im Anschlag mit der Anschlagfläche 15 des Anzeigeelementes 14 am Verbindungskörper 10 steht, so dass das Fenster 18 aus Figur 1 geschlossen ist. Gleichzeitig ist auch der axiale Spalt zwischen den Anzeigeelementen 13, 14 geschlossen, so dass hieraus der Zustand der Fertigmontage ersichtlich ist.

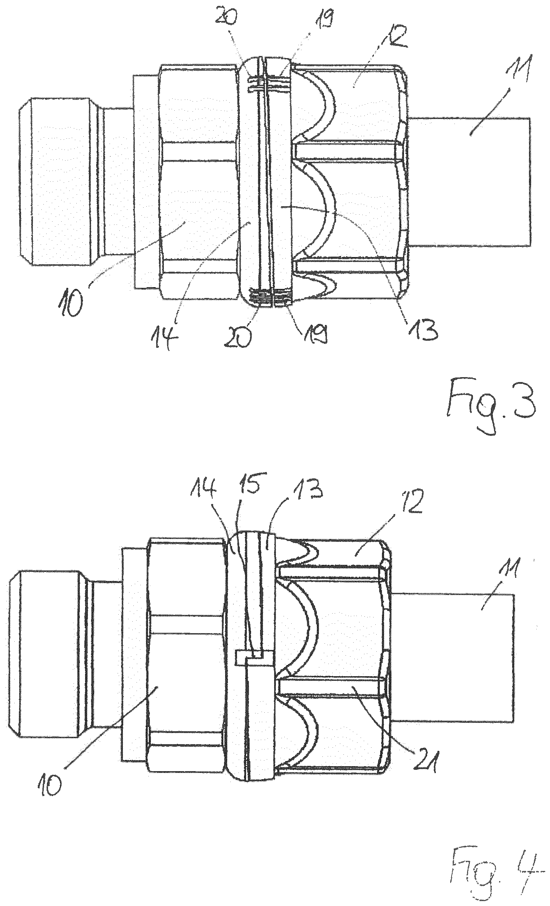

Bei dem dargestellten Ausführungsbeispiel sind zusätzlich an dem Umfang beider Anzeigeelemente 13 und 14 optisch erkennbare Zeichen 19 beziehungsweise 20 angebracht, die vor Erreichen der Fertigmontage an unterschiedlichen Stellen liegen und bei Erreichen der Fertigmontage in eine Flucht miteinander gebracht sind, wie dies aus Figur 3 ersichtlich ist.

Soweit in einer besonderen Ausführungsform der Erfindung Vorkehrungen dafür getroffen sind, dass auch bei einer im Rahmen einer Erst- oder auch Wiederholmontage geschehenen Übermontage bei anschließenden Wiederholmontagen wiederum die durch die Übermontage herbeigeführte Stellung der Überwurfmutter 12 auf dem Verbindungskörper 10 erreicht wird, ist bei dem in der Zeichnung dargestellten Ausführungsbeispiel vorgesehen, dass das an der Überwurfmutter 12 angebrachte Anzeigeelement 13 an der Überwurfmutter 12 derart drehbar angeordnet ist, dass das Anzeigeelement 13 gegenüber der Überwurfmutter 12 bei Überwindung eines voreingestellten Widerstandes verdrehbar ist.

Soweit eine derartige Übermontagestellung in Figur 4 dargestellt ist, lässt sich der Zustand durch einen Vergleich der Figur 4 mit der Figur 2 erkennen. Es ist ersichtlich, dass sich die Anschlagfläche 15 des am Verbindungskörper 10 angebrachten Anzeigelements 14 sowohl in Figur 2 als auch in Figur 4 an der gleichen Stelle befindet. Soweit ausgehend von der in Figur 2 dargestellten Fertigmontagestellung die Überwurfmutter 12 noch einen Übermontage-Drehweg in die Zeichnungsebene hinein vollzogen hat, ist der in Figur 2 unterste Steg 21 der an der Überwurfmutter 12 ausgebildeten Schraubkontur in dem in Figur 4 dargestellten Übermontage-Zustand nach oben und damit näher an die Anschlagfläche 15 des Anzeigeelements 13 herangewandert. Da das an der Überwurfmutter 12 angebrachte Anzeigeelement 13 mit seiner Anschlagfläche 15 von der Anschlagfläche 15 des am Verbindungskörper 10 angebrachten Anzeigeelements 14 bei Erreichen der Fertigmontage (Figur 2) festgelegt war, hat die mit der Übermontage verbundene Weiterdrehung der Überwurfmutter 12 zu einer Relativverdrehung zwischen dem Anzeigeelement 13 und der Überwurfmutter 12 geführt. Wird die in Figur 4 dargestellte Verbindung gelöst, so verbleibt das Anzeigeelement 13 in der verdrehten Stellung an der Überwurfmutter 12, und bei einer wiederholten Montage der Verbindung muss die Überwurfmutter 12 nun in die aus Figur 4 ersichtliche Stellung verdreht werden, um eine ordnungsgemäße Fertigmontage zu erreichen.

## Patentansprüche

1. Verbindungsvorrichtung für Rohr- oder Schlauchleitungen mit einem eine Bohrung zur Durchleitung eines die Rohr- oder Schlauchleitung durchströmenden Mediums aufweisenden Verbindungskörper (10) und mit einem in eine am vorderen Ende des Verbindungskörpers (10) ausgebildete Aufnahme einsteckbaren und darin mittels einer außen auf dem Verbindungskörper (10) zwischen einer Lösestellung und einer Montagestellung verdrehbar angeordneten Überwurfmutter (12) der Verbindungsvorrichtung festlegbaren rohrähnlichen Endstück (11), wobei zwischen den einander zugewandten Stirnflächen von Überwurfmutter (12) und Verbindungskörper (10) eine den Montagezustand der Verbindungsvorrichtung wiedergebende Anzeige angeordnet ist, wobei die Anzeige aus zwei jeweils an den Stirnseiten von Verbindungskörper (10) und Überwurfmutter (12) derart ausgebildeten ringförmigen Anzeigeelementen (13, 14) als Träger wenigstens jeweils einer Markierung besteht, dass die Markierungen der beiden Anzeigeelemente (13, 14) zu Beginn der Montage der Überwurfmutter (12) an unterschiedlichen Stellen des Umfangs von Verbindungskörper (10) und Überwurfmutter (12) stehen und bei Fertigmontage der Verbindungsvorrichtung durch die beim Aufschrauben der Überwurfmutter (12) erfolgende Relativdrehung der beiden Anzeigeelemente (13, 14) gegeneinander in eine miteinander übereinstimmende Stellung gebracht sind, **dadurch gekennzeichnet, dass** jedes Anzeigeelement (13, 14) von einem gesonderten, mit dem Verbindungskörper (10) beziehungsweise der Überwurfmutter (12) verbundenen Anzeigering gebildet ist und wobei ein Anzeigering (13, 14) durch die beim Aufschrauben der Überwurfmutter (12) auf den Verbindungskörper (10) erfolgende Relativdrehung nach Erreichen des Anschlages zwischen den beiderseitigen Anschlagflächen (15) der Anzeigeringe (13, 14) nach Überwindung eines voreingestellten Widerstands verdrehbar angeordnet ist.

2. Verbindungsvorrichtung für Rohr- oder Schlauchleitungen mit einem eine Bohrung zur Durchleitung eines die Rohr- oder Schlauchleitung durchströmenden Mediums aufweisenden Verbindungskörper (10) und mit einem in eine am vorderen Ende des Verbindungskörpers (10) ausgebildete Aufnahme einsteckbaren und darin mittels einer außen auf dem Verbindungskörper (10) zwischen einer Lösestellung und einer Montagestellung verdrehbar angeordneten Überwurfmutter (12) der Verbindungsvorrichtung festlegbaren rohrähnlichen Endstück (11), wobei zwischen den einander zugewandten Stirnflächen von Überwurfmutter (12) und Verbindungskörper (10) eine den Montagezustand der Verbindungsvorrichtung wiedergebende Anzeige angeordnet ist, wobei die Anzeige aus zwei jeweils an den Stirnseiten von Verbindungskörper (10) und Überwurfmutter (12) derart ausgebildeten ringförmigen Anzeigelementen (13, 14) als Träger wenigstens jeweils einer Markierung besteht, dass die Markierungen der beiden Anzeigeelemente (13, 14) zu Beginn der Montage der Überwurfmutter (12) an unterschiedlichen Stellen des Umfangs von Verbindungskörper (10) und Überwurfmutter (12) stehen und bei Fertigmontage der Verbindungsvorrichtung durch die beim Aufschrauben der Überwurfmutter (12) erfolgende Relativdrehung der beiden Anzeigeelemente (13, 14) gegeneinander in eine miteinander übereinstimmende Stellung gebracht sind, **dadurch gekennzeichnet, dass** eines der Anzeigeelemente (13, 14) aus einem gesonderten mit dem Verbindungskörper (10) oder der Überwurfmutter (12) verbundenen Anzeigering besteht und das andere Anzeigeelement (13, 14) mit Gewindegang und Anschlagfläche (15) einstückig an der Stirnfläche von Verbindungskörper (10) oder Überwurfmutter (12) ausgearbeitet ist, und wobei der Anzeigering (13, 14) durch die beim Aufschrauben der Überwurfmutter (12) auf den Verbindungskörper (10) erfolgende Relativdrehung nach Erreichen des Anschlages zwischen den beiderseitigen Anschlagflächen (15) der Anzeigeelemente (13, 14) nach Überwindung eines voreingestellten Widerstands verdrehbar angeordnet ist.

3. Verbindungsvorrichtung nach Anspruch 1 oder 2, **dadurch gekennzeichnet, dass** die Stirnflächen (16) der am Verbindungskörper (10) und der Überwurfmutter (12) jeweils ausgebildeten Anzeigeelemente (13, 14) gewindeartig mit einer am äußeren Ende des zugeordneten vordersten Gewindeganges angeordneten, axial ausgerichteten Anschlagfläche (15) als Markierung derart ausgebildet sind, dass vor Abschluss der Montage zwischen den Anzeigeelementen (13, 14) einerseits ein axialer Spalt (17) und andererseits zwischen deren Anschlagflächen (15) ein sich in Umfangsrichtung erstreckender Abstand besteht und bei Fertigmontage aufgrund der bei Drehung der Überwurfmutter (12) eingetretenen axialen Verschiebung und gleichzeitige Relativdrehung der Anzeigeringe (13, 14) zueinander der axiale Spalt (17) geschlossen ist und die beiderseitigen Anschlagflächen (15) der Anzeigeringe (13, 14) aneinander anliegen.

4. Verbindungsvorrichtung nach einem der Ansprüche 1 bis 3, **dadurch gekennzeichnet, dass** die Markierungen aus an wenigstens einem Umfangsbereich der Anzeigeringe (13, 14) angeordneten optisch erkennbaren Zeichen (19, 20) bestehen, die bei Fertigmontage durch die Verdrehung der Anzeigeringe (13, 14) gegeneinander in eine Flucht miteinander gebracht sind.

5. Verbindungsvorrichtung nach einem der Ansprüche 1 bis 4, **dadurch gekennzeichnet, dass** die von dem an der Überwurfmutter (12) angeordneten Anzeigering (13) bei deren Relativdrehung zum Verbindungskörper (10) überstrichene Umfangsfläche des Verbindungskörpers (10) farblich abgesetzt ist.

## Claims

1. Connecting device for pipes or hoses with a connecting body (10) having a borehole for the passage of a medium flowing through the pipe or hose, and with a tubular end piece that can be inserted into a receptacle provided at the front end of the connecting body (10) and fixable therein between a loosened position and an assembly position by means of a union nut (12) arranged rotatably on the outside of the connecting body (10), whereby between the opposing end faces of union nut (12) and connecting body (10) an indicator is arranged showing the state of assembly of the connecting device, wherein the indicator comprises two ring-shaped indicator bodys (13, 14) each bearing one marking and formed on the end faces of connecting body (10) and union nut (12) in such a manner, that at the start of assembly of the union nut (12) the markings of the two indicator bodys (13, 14) are at different points on the circumference of the connecting body (10) and union nut (12) and when assembly of the connecting device is complete they are moved into a position corresponding with each other through the relative rotation of the two indicator bodys (13, 14) moved about through screwing on the union nut (12), **characterised in that** each indicator body (13, 14) is formed by a separate indicator ring connected with the connecting body (10) and the union nut (12) respectively and wherein one indicator ring (13, 14) after reaching the stop between the stop surfaces (15) of the indicator rings (13, 14) through the relative movement resulting from screwing the union nut (12) onto the connecting body (10) and after overcoming a predefined resistance is arranged in a rotatable manner.

2. Connecting device for pipes or hoses with a connecting body (10) having a borehole for the passage of a medium flowing through the pipe or hose, and with a tubular end piece that can be inserted into a receptacle provided at the front end of the connecting body (10) and fixable therein between a loosened position and an assembly position by means of a union nut (12) arranged rotatably on the outside of the connecting body (10), whereby between the opposing end faces of union nut (12) and connecting body (10) an indicator is arranged showing the state of assembly of the connecting device, wherein the indicator comprises two ring-shaped indicator bodys (13, 14) each bearing one marking and formed on the end faces of connecting body (10) and union nut (12) in such a manner, that at the start of assembly of the union nut (12) the markings of the two indicator bodys (13, 14) are at different points on the circumference of the connecting body (10) and union nut (12) and when assembly of the connecting device is complete they are moved into a position corresponding with each other through the relative rotation of the two indicator bodys (13, 14) moved about through screwing on the union nut (12), **characterised in that** one of the indicator bodys (13, 14) consists of a separate indicator ring connected with the connecting body (10) or the union nut (12) and the other indicator body (13, 14) is produced with a thread and a stop surface (15) in one piece on the end surface of the connecting body (10) or union nut (12) and wherein the indicator ring (13, 14) after reaching the stop between the stop surfaces (15) of the indicator bodys (13, 14) through the relative movement resulting from screwing the union nut (12) onto the connecting body (10) and after overcoming a predefined resistance is arranged in a rotatable manner.

3. Connecting device according to claim 1 or 2, **characterised in that** the end faces (16) of the indicator bodys (13, 14) on the connecting body (10) and the union nut (12) are threaded and have an axially aligned stop surface (15) as a marking on the outer end of the assigned foremost thread in such a manner, that before completion of assembly there is on the one hand an axial gap (17) between the indicator bodys (13, 14) and on the other hand between their stop surfaces (15) there is a gap extending in the circumferential direction and on completion of assembly due to the axial displacement occurring during turning of the union nut (12) and the simultaneous relative rotation of the indicator rings (13, 14) with regard to each other, the axial gap (17) is closed and the stop surfaces (15) on both of the indicator rings (13, 14) are in contact with one another.

4. Connecting device according to one of claims 1 to 3, **characterised in that** the markings consist of at least one optically identifiable symbol (19, 20) arranged on at least one circumferential area of the indicator rings (13, 14) which in the completed assembly position are moved into alignment with each other through the rotation of the indicator rings (13, 14) with regard to each other.

5. Connecting device according to one of the claims 1 to 4, **characterised in that** the circumferential surface of connecting body (10) covered by the indicator ring (13) arranged on the union nut (12) during its rotation relative to the connecting body (10) is trimmed with a different colour.

## Revendications

1. Dispositif d'assemblage de conduits en tube ou en flexible avec un organe d'assemblage (10) comportant un perçage pour le passage d'un fluide traversant le conduit en tube ou en flexible et avec une pièce d'extrémité (11) de type tube, enfichable dans un logement conçu sur l'extrémité avant de l'organe d'assemblage (10) et immobilisable dans celui-ci à l'aide d'un écrou-raccord (12) du dispositif d'assemblage placé à l'extérieur sur l'organe d'assemblage (10) en étant rotatif entre une position desserrée et une position de montage, entre les faces frontales dirigées l'une vers l'autre de l'écrou-raccord (12) et de l'organe d'assemblage (10) étant placé un indicateur reproduisant la position de montage du dispositif d'assemblage, l'indicateur étant constitué de deux éléments indicateurs (13, 14) annulaires conçus respectivement sur les faces frontales de l'organe d'assemblage (10) et de l'écrou-raccord (12) en tant que supports de chacun au moins un marquage, de telle sorte qu'au début du montage de l'écrou-raccord (12), les marquages des deux éléments indicateurs (13, 14) se trouvent en des endroits différents de la périphérie de l'organe d'assemblage (10) et de l'écrou-raccord (12) et lorsque le montage du dispositif d'assemblage est achevé, par la rotation relative des deux éléments indicateurs (13, 14) s'effectuant lors du vissage de l'écrou-raccord (12) sont amenés l'un contre l'autre dans une position mutuellement concordante, **caractérisé en ce que** chaque élément indicateur (13, 14) est formé par un anneau indicateur séparé, assemblé avec l'organe d'assemblage (10), respectivement l'écrou-raccord (12) et par la rotation relative s'effectuant lors du vissage de l'écrou-raccord (12) sur l'organe d'assemblage (10), un anneau indicateur (13, 14) étant placé en étant rotatif, après atteinte de la butée entre les surfaces de butée (15) de part et d'autre des anneaux indicateurs (13, 14), après avoir surmonté une résistance préréglée.

2. Dispositif d'assemblage de conduits en tube ou en flexible avec un organe d'assemblage (10) comportant un perçage pour le passage d'un fluide traversant le conduit en tube ou en flexible et avec une pièce d'extrémité (11) de type tube, enfichable dans un logement conçu sur l'extrémité avant de l'organe d'assemblage (10) et immobilisable dans celui-ci à l'aide d'un écrou-raccord (12) du dispositif d'assemblage placé à l'extérieur sur l'organe d'assemblage (10) en étant rotatif entre une position desserrée et une position de montage, entre les faces frontales dirigées l'une vers l'autre de l'écrou-raccord (12) et de l'organe d'assemblage (10) étant placé un indicateur reproduisant la position de montage du dispositif d'assemblage, l'indicateur étant constitué de deux éléments indicateurs (13, 14) annulaires conçus respectivement sur les faces frontales de l'organe d'assemblage (10) et de l'écrou-raccord (12) en tant que supports de chacun au moins un marquage, de telle sorte qu'au début du montage de l'écrou-raccord (12), les marquages des deux éléments indicateurs (13, 14) se trouvent en des endroits différents de la périphérie de l'organe d'assemblage (10) et de l'écrou-raccord (12) et lorsque le montage du dispositif d'assemblage est achevé, par la rotation relative des deux éléments indicateurs (13, 14) s'effectuant lors du vissage de l'écrou-raccord (12) sont amenés l'un contre l'autre dans une position mutuellement concordante, **caractérisé en ce que** l'un des éléments indicateurs (13, 14) est constitué d'un anneau indicateur séparée, assemblé avec l'organe d'assemblage (10) ou l'écrou-raccord (12) et l'autre élément indicateur (13, 14) est élaboré en monobloc, avec le pas de vis et la surface de butée (15) sur la face frontale de l'organe d'assemblage (10) ou de l'écrou-raccord (12), et par la rotation relative s'effectuant lors du vissage de l'écrou-raccord (12) sur l'organe d'assemblage (10), l'anneau indicateur (13, 14) étant placé en étant rotatif, après atteinte de la butée entre les surfaces de butée (15) de part et d'autre des anneaux indicateurs (13, 14), après avoir surmonté une résistance préréglée.

3. Dispositif d'assemblage selon la revendication 1 ou 2, **caractérisé en ce que** les faces frontales (16) des éléments indicateurs (13, 14) conçus respectivement sur l'organe d'assemblage (10) et l'écrou-raccord (12) sont conçues à la manière d'un filetage avec une surface de butée (15) orientée en direction axiale, placée sur l'extrémité extérieure du pas de vis le plus à l'avant associé en tant que marquage, de telle sorte qu'avant l'achèvement du montage, il reste entre les éléments indicateurs (13, 14) d'une part un interstice (17) axial et d'autre part entre leurs surfaces de butée (15), un écart s'étendant en direction périphérique et lorsque le montage est achevé, du fait du déplacement axial intervenu lors de la rotation de l'écrou-raccord (12) et de la rotation relative simultanée des anneaux indicateurs (13, 14) l'un vers l'autre, l'interstice (17) axial soit fermé et les surfaces de butée (15) de part et d'autre des anneaux indicateurs (13, 14) soient adjacentes.

4. Dispositif d'assemblage selon l'une quelconque des revendications 1 à 3, **caractérisé en ce que** les marquages sont constitués de caractères (19, 20) visuellement identifiables, placés sur au moins une zone périphérique des anneaux indicateurs (13, 14), qui lorsque le montage est achevé, par la rotation l'un contre l'autre des anneaux indicateurs (13, 14) sont amenés en un alignement mutuel l'un vers l'autre.

5. Dispositif d'assemblage selon l'une quelconque des revendications 1 à 4, caractérisé en que la surface périphérique de l'organe d'assemblage (10) qui est effleurée par l'anneau indicateur (13) placé sur l'écrou-raccord (12) lors de sa rotation relative par rapport à l'organe d'assemblage (10) est de coloris contrasté.
